(19) Europäisches Patentamt

European Patent Office

Office européen des brevets

(11) **EP 1 447 425 A1**

(12) **EUROPEAN PATENT APPLICATION**
published in accordance with Art. 158(3) EPC

(43) Date of publication:
**18.08.2004 Bulletin 2004/34**

(51) Int Cl.[7]: **C08L 7/00**, C08K 3/36

(21) Application number: **02768067.7**

(86) International application number:
**PCT/JP2002/009879**

(22) Date of filing: **25.09.2002**

(87) International publication number:
**WO 2003/031511 (17.04.2003 Gazette 2003/16)**

(84) Designated Contracting States:
**AT BE BG CH CY CZ DE DK EE ES FI FR GB GR IE IT LI LU MC NL PT SE SK TR**

(30) Priority: **09.10.2001 JP 2001311839**

(71) Applicant: **THE YOKOHAMA RUBBER CO., LTD. Tokyo 105-8685 (JP)**

(72) Inventors:
• **KIRINO, Yoshiaki,
THE YOKOHAMA RUBBER CO. LTD.
Hiratsuka-shi, Kanagawa 254-8601 (JP)**

• **YATSUYANAGI, Fumito,
THE YOKOHAMA RUBBER CO. LTD.
Hiratsuka-shi, Kanagawa 254-8601 (JP)**

(74) Representative: **HOFFMANN - EITLE
Patent- und Rechtsanwälte
Arabellastrasse 4
81925 München (DE)**

(54) **RUBBER COMPOSITION**

(57) A rubber composition containing 100 parts by weight of a diene-based rubber and 10 to 100 parts by weight of silica having an aluminum content of 0.01 to 0.24% by weight, a CTAB specific surface area of 70 to 210 $m^2/g$, a BET/CTAB ratio of 1.0 to 1.4 and a number of silanol groups per unit area of 3.0 to 5.5 groups/$nm^2$ and having superior overall properties of processability, dispersibility, abrasion resistance, wet abrasion and low heat buildup.

EP 1 447 425 A1

**Description**

TECHNICAL FIELD

The present invention relates to a silica formulated rubber composition having improved overall properties of processability, dispersibility, abrasion resistance, wet friction and low heat buildup.

BACKGROUND ART

Technology intended to improve the processability of a diene-based rubber composition for tire use and also to reduce the amount of use of a coupling agent, without deteriorating the characteristics of the composition by using aluminum-doped precipitated silica having an aluminum content of the silica of 0.35 to 3% by weight based upon the weight of the silica as a reinforcing filler of a rubber composition for producing a tire based on at least one diene-based polymer is known by, for example, Japanese Unexamined Patent Publication (Kokai) JP-A-8-277346, Japanese Unexamined Patent Publication (Kokai) JP-A-10-503748, Japanese Unexamined Patent Publication (Kokai) JP-A-10-504012.

When the amount of aluminum contained in a minor amount in the silica generally used as a rubber reinforcing filler is large or the amount of silanol of the silica is large, the incorporation thereof in the rubber becomes poor or the Mooney viscosity also becomes high, and therefore, the processability or dispersibility of the rubber composition containing such a silica reinforcing agent becomes poor. Further, when silica having a CTAB specific surface area and BET/CTAB ratio of the silica is within a predetermined range, it has been found that the abrasion resistance, wet friction performance and low heat buildup property are improved.

DISCLOSURE OF THE INVENTION

Accordingly, the object in the present invention is to provide a rubber composition having superior processability, dispersibility, abrasion resistance and wet abrasion performance by controlling the content of aluminum in the silica, the number of silanol groups, the CTAB specific surface area and the BET/CTAB ratio to a suitable range and by formulating such a silica to a diene-based rubber.

In accordance with the present invention, there is provided a rubber composition comprising 100 parts by weight of at least one diene-based rubber and 10 to 100 parts by weight of silica having an aluminum content of 0.01 to 0.24% by weight, a CTAB specific surface area of 70 to 210 $m^2$/g, a BET/CTAB ratio of 1.0 to 1.4 and a number of silanol groups per unit area of 3.0 to 5.5 groups/$nm^2$.

In accordance with the present invention, there is also provided a rubber composition further containing a silane coupling agent in an amount determined by the following formula (I):

$$\text{Amount of silane coupling agent (parts by weight)} =$$

$$A \times \text{number of silane groups (groups/nm}^2) \times \text{BET specific}$$

$$\text{surface area (m}^2/g) \times \text{amount of silica (parts by weight)} \qquad (I):$$

wherein $A = 7.48 \times 10^{-5} - 1.14 \times 10^{-4}$.

MODE FOR CARRYING OUT THE INVENTION

The present invention is based on the finding that, when as the silica used as a reinforcing filler in the rubber composition of the present invention, silica, preferably precipitated silica, having aluminum content, number of silanol groups, CTAB specific surface area and BET/CTAB ratio which are controlled to the above predetermined ranges, a rubber composition having superior overall properties of processability, dispersibility, abrasion resistance, wet abrasion performance and low heat buildup can be obtained.

According to the above finding of the present invention, when the content of the aluminum in the silica is 0.01 to 0.24% by weight, good results were able to be obtained. When the content of the aluminum is more than 0.24% by weight, the incorporation of the silica into the rubber becomes poor and the Mooney viscosity becomes high. Further, when the aluminum content is 0.01 to 0.1% by weight, better results are obtained in the above properties.

Further, in the silica according to the present invention, it is preferable to select silica having a CTAB specific surface area of 70 to 210 m$^2$/g and a BET/CTAB ratio of 1.0 to 1.4, to secure reinforcement of the rubber. When the CTAB specific surface area is less than 70 m$^2$/g and the BET/CTAB ratio is less than 1.0, the intended reinforcement becomes difficult. Further, when the CTAB specific surface area is more than 210 m$^2$/g and the BET/CTAB ratio is more than 1.4, the dispersibility becomes poor.

Further, in the silica according to the present invention, in order to improve the processability and dispersibility and to improve the abrasion resistance, wet abrasion performance and low heat buildup and further the tanδ balance, it is preferable to select silica having a number of silanol groups per unit area of 3.0 to 5.5 groups/nm$^2$. When the number of silanol groups is in the above predetermined range, the processability, dispersibility, abrasion resistance, wet abrasion performance and low heat buildup can be improved with a good balance. More preferably, the silica has a number of silanol groups of 4.8 to 5.5 groups/nm$^2$, whereby the good abrasion resistance can be maintained.

The diene-based rubber component usable in the rubber composition of the present invention includes natural rubber (NR) and, as a diene-based synthetic rubber, for example, polyisoprene rubber (IR), various types of styrene-butadiene copolymer rubber (SBR), various types of polybutadiene rubber (BR), acrylonitrile-butadiene copolymer rubber (NBR), butyl rubber (IIR), etc. These may be used alone or as mixtures of two or more types. When a rubber mixture of two or more types of natural rubber and diene-based synthetic rubber is used, the use of at least 60 parts by weight of natural rubber in the rubber composition is preferable in terms of the desired object.

The rubber composition of the present invention includes the silica according to the present invention used in an amount of 10 to 100 parts by weight, preferably 30 to 90 parts by weight, based upon 100 parts by weight of the rubber component. If the amount is too small, the desired effect cannot be obtained. Further, if the amount is too great, the hardness becomes too high or the processability is decreased and the rubber material is poor in useability, and therefore, this is not preferred.

The rubber composition of the present invention may contain therein, as a reinforcing agent, in addition to the above silica, an ordinary carbon black. This may be formulated in an amount of at least 10 parts by weight, preferably 10 to 80 parts by weight, based upon 100 parts by weight of the rubber component. If the amount of the carbon black is too great, there is a problem in the processing of the rubber. Further, if the amount is too small, the effects of formulation, for example, the prevention of deterioration due to UV rays and imparting of conductivity are low.

The rubber composition of the present invention preferably further contain therein, in addition to the above essential components, a silane coupling agent. When a silane coupling agent is used, it is possible to use any silane coupling agent used in a rubber composition in the past. As the amount used, it is preferable to use the amount of a silane coupling agent determined by the following formula (I):

$$\text{Amount of silane coupling agent (parts by weight)} =$$

$$A \times \text{number of silane groups (groups/nm}^2) \times \text{BET specific}$$

$$\text{surface area (m}^2/\text{g}) \times \text{amount of silica (parts by weight)} \tag{I}$$

wherein A = 7.48 x 10$^{-5}$ - 1.14 x 10$^{-4}$.

The rubber composition of the present invention may contain therein, in addition to the above components, a vulcanization or cross-linking agent, vulcanization or cross-linking accelerator, various types of oils, an antioxidant, a plasticizer, or other various compounding agents usually for tire use or other general rubber uses. This formulation may be mixed and vulcanized by general methods to obtain a rubber composition which is used for vulcanization or cross-linking. The amounts of these additives blended may be made the general amounts blended in the past so long as the object of the present invention is not adversely affected.

Examples

The present invention will now be explained further by Examples and Comparative Examples, but the technical scope of the present invention is of course not limited to these Examples.

Production of Test Samples

Using the precipitated silica of the type of silica shown in the following Table II, the components other than the vulcanization accelerator and sulfur among the components of the rubber formulation shown in Table I were mixed in a 1.8 liter internal mixer for 3 to 5 minutes and discharged when the temperature reached 165±5°C. The vulcanization accelerator and sulfur were added to this master batch and the resultant mixture was mixed in an 8-inch open roll to obtain a rubber composition. The Mooney viscosity of the rubber composition thus obtained was determined. Next, the above vulcanization accelerator was added to this composition which was then press vulcanized in a 15 x 15 x 0.2 cm mold at 160°C for 20 minutes to prepare a desired test piece (i.e., rubber sheet). Due to this, the dispersibility, abrasion resistance and tanδ (0°C, 60°C) were determined and evaluated.

Table I

| (Rubber Formulation) | |
| --- | --- |
| (Components of Formulation) | (Parts by weight) |
| Oil extended SBR[1] | 137.5 |
| Various types of silica[2] | 80 |
| Silane coupling agent[3] | Amount shown in Table II |
| Zinc oxide[4] | 3 |
| Stearic acid[5] | 1 |
| Vulcanization accelerator[6] | 1 |
| Sulfur[7] | 2 |

1) 37.5% oil extended emulsion polymerized styrene/butadiene rubber, SBR 1712 (made by Nippon Zeon)

2) See Table II

3) Si69 (made by Degussa)

4) Zinc White #3, industrial use zinc oxide

5) Industrial stearic acid

6) Noccelar CZ (N-cyclohexyl-2-benzothiazylsulfenamide) (made by Ouchi Shinko Chemical Industry)

7) 5% oil treated powdered sulfur (made by Karuizawa Refineries)

Test Methods

1) Mooney viscosity: measured according to JIS K6300 at 100°C.

2) Dispersibility: Vulcanized rubber was cut by a sharp blade, then the state of dispersion of silica on the surface was confirmed visually and by an optical microscope (X100, X400) and evaluated by the following method of evaluation:

◎ Uniformly dispersed with almost no poorly dispersed clumps of silica (several hundred μm diameter)

○ Several poorly dispersed clumps of silica are observed, but otherwise dispersed to some extent.

Δ Tens of poorly dispersed clumps of silica are observed, but otherwise dispersed to some extent.

× Visibility of powder-like substance can be observed from cut surface. Innumerable poorly dispersed clumps of silica seen.

3) Abrasion resistance: Lambourn-type abrasion tester (made by Iwamoto Seisakusho) used to measure the reduction in weight by abrasion under conditions of a temperature of 20°C and a slip rate of 25% and indexed to the value of Comparative Example 1 as 100. The larger the value, the better the abrasion resistance.

4) tanδ (0°C, 60°C): Viscoelasticity spectrometer (made by Toyo Seiki Seisakusho) used to measure the viscoelasticity under conditions of a temperature of 0°C and 60°C, an initial strain of 10%, a dynamic strain of ±2%, and a frequency of 20 Hz (test width: 5 mm)

5) Measurement of amount of silanol: The amount of silanol groups was measured in accordance with Shokubai Kasei Giho, vol. 18, no. 2, pp. 29 to 33 (1991) (issued by Shokubai Kasei Kogyo).

Examples 1 to 10 and Comparative Examples 1 to 6

Rubber compositions obtained by formulating the various types of silica and predetermined amounts of silica coupling agent in the above rubber formulation systems were measured and the results of evaluation are shown. The results are shown in Table II.

EP 1 447 425 A1

Table II

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| **Silica** | | | | | | | | | | |
| Aluminum content (%) | 0.01 | 0.1 | 0.24 | 0.1 | 0.1 | 0.01 | 0.1 | 0.1 | 0.1 | 0.1 |
| Amount of silanol (groups/nm$^2$) | 4.8 | 5.2 | 5.5 | 5.2 | 5.2 | 3.0 | 5.2 | 5.2 | 5.2 | 5.2 |
| BET/CTAB | 1.20 | 1.22 | 1.21 | 1.21 | 1.01 | 1.40 | 1.22 | 1.22 | 1.22 | 1.22 |
| BET (m$^2$/g) | 179 | 180 | 180 | 85 | 212 | 207 | 180 | 180 | 180 | 180 |
| CTAB (m$^2$/g) | 149 | 148 | 149 | 70 | 210 | 148 | 148 | 148 | 148 | 148 |
| **Silane coupling agent** | | | | | | | | | | |
| Amount of silane coupling agent (parts by weight) | 6 | 6 | 6 | 6 | 6 | 6 | 5.25 | 5.6 | 8.5 | 10 |
| Value of "A" | $8.73 \times 10^{-5}$ | $8.01 \times 10^{-5}$ | $7.58 \times 10^{-5}$ | $1.70 \times 10^{-4}$ | $6.80 \times 10^{-5}$ | $1.21 \times 10^{-4}$ | $7.01 \times 10^{-5}$ | $7.48 \times 10^{-5}$ | $1.14 \times 10^{-4}$ | $1.34 \times 10^{-4}$ |
| Mooney viscosity | 72 | 73 | 74 | 41 | 100 | 68 | 76 | 75 | 73 | 70 |
| Dispersibility | ○ | ○ | △ | ◎ | ○ | ○ | ○ | ○ | ○ | ○ |
| Abrasion resistance (index) | 106 | 104 | 104 | 82 | 120 | 102 | 102 | 104 | 104 | 102 |
| tanδ (0°C) (wet abrasion) | 0.437 | 0.435 | 0.434 | 0.301 | 0.521 | 0.436 | 0.427 | 0.431 | 0.432 | 0.421 |
| tanδ (60°C) (rolling resistance) | 0.158 | 0.160 | 0.161 | 0.110 | 0.201 | 0.153 | 0.166 | 0.164 | 0.150 | 0.146 |
| tanδ (0°C)/tanδ (60°C) | 2.77 | 2.72 | 2.70 | 2.74 | 2.59 | 2.85 | 2.57 | 2.63 | 2.88 | 2.88 |

Table II (Continued)

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| **Silica** | | | | | | |
| Aluminum content (%) | 0.6 | 0.6 | 0.1 | 0.1 | 0.1 | 0.1 |
| Amount of silanol (groups/nm²) | 6.0 | 5.3 | 6.0 | 5.2 | 5.2 | 5.2 |
| BET/CTAB | 1.20 | 1.20 | 1.20 | 1.20 | 1.09 | 1.69 |
| BET (m²/g) | 178 | 178 | 178 | 72 | 240 | 250 |
| CTAB (m²/g) | 148 | 148 | 148 | 60 | 220 | 148 |
| **Silane coupling agent** | | | | | | |
| Amount of silane coupling agent (parts by weight) | 6 | 6 | 6 | 6 | 6 | 6 |
| Value of "A" | $7.02 \times 10^{-5}$ | $7.95 \times 10^{-5}$ | $7.02 \times 10^{-5}$ | $200 \times 10^{-4}$ | $6.01 \times 10^{-5}$ | $5.77 \times 10^{-5}$ |
| Mooney viscosity | 79 | 78 | 79 | 37 | 113 | 69 |
| Dispersibility | X | X | X | ◎ | △ | ○ |
| Abrasion resistance (index) | 100 | 100 | 100 | 57 | 101 | 108 |
| tanδ (0°C) (wet abrasion) | 0.426 | 0.434 | 0.434 | 0.26 | 0.536 | 0.418 |
| tanδ (60°C) (rolling resistance) | 0.168 | 0.163 | 0.168 | 0.095 | 0.211 | 0.156 |
| tanδ (0°C)/tanδ (60°C) | 2.54 | 2.66 | 2.58 | 2.74 | 2.54 | 2.68 |

Examples 1 to 3 and Comparative Examples 1 to 3 are those in which the aluminum content and the amount of silanol were changed. Examples 1 to 3, where the aluminum contents and amounts of silanol are both small, exhibited lower Mooney viscosities and better dispersion compared with Comparative Examples 1 to 3. In Comparative Examples 1 and 3 having high amounts of silanol, the tanδ ratio (0°C/60°C), an indicator of the balance of the rolling resistance and the wet abrasion performance, is also poor. In Example 6, the effect was confirmed until an amount of silanol of 3.0 groups/nm². Therefore, it is better than the aluminum content be 0.01 to 0.24% by weight and the amount of silanol be not more than 3.0 to 5.5 groups/nm².

Examples 4 and 5 and Comparative Examples 4 and 5 are those in which CTAB values of the samples were varied. Comparative Example 4 is very poor in abrasion resistance and is not able to be used in practice. Further, Comparative Example 5 exhibited somewhat poor dispersibility, was high in Mooney viscosity, and poor in tanδ ratio (0°C/60°C), the indicator of the balance of rolling resistance and wet abrasion performance. Therefore, the CTAB should be 70 to 210 m$^2$/g.

Example 6 and Comparative Example 6 are those in which BET/CTAB values were changed. In Comparative Example 6 where the BET/CTAB value is too high, the tanδ at 0°C and the tanδ ratio (0°C/60°C) is also low. In Example 5, the effects were confirmed until a BET/CTAB ratio of 1.0. Therefore, a BET/CTAB ratio of 1.0 to 1.4 is good.

INDUSTRIAL APPLICABILITY

As is clear from the results of Table II, it is understood that the rubber composition containing the predetermined silica and predetermined amount of silane coupling agent of the present invention is extremely superior in overall properties of processability, dispersibility, abrasion resistance, wet abrasion performance and low heat buildup.

**Claims**

1. A rubber composition comprising 100 parts by weight of at least one diene-based rubber and 10 to 100 parts by weight of silica having an aluminum content of 0.01 to 0.24% by weight, a CTAB specific surface area of 70 to 210 m$^2$/g, a BET/CTAB ratio of 1.0 to 1.4 and a number of silanol groups per unit area of 3.0 to 5.5 groups/nm$^2$.

2. A rubber composition as claimed in claim 1, wherein said diene-based rubber is selected from styrene-butadiene-based copolymer rubber (SBR), polybutadiene rubber (BR), polyisoprene rubber, acrylonitrile-butadiene copolymer rubber (NBR) and butyl rubber (IIR).

3. A rubber composition as claimed in claim 1 or 2, further comprising a silane coupling agent in an amount determined by the following formula (I):

$$\text{Amount of silane coupling agent (parts by weight)} = A \times \text{number of silane groups (groups/nm}^2\text{)} \times \text{BET specific surface area (m}^2\text{/g)} \times \text{amount of silica (parts by weight)} \tag{I}$$

wherein $A = 7.48 \times 10^{-5} - 1.14 \times 10^{-4}$.

4. A rubber composition as claimed in any one of claims 1 to 3, wherein at least 60 parts by weight, based upon 100 parts by weight of the diene-based rubber, is natural rubber.

# INTERNATIONAL SEARCH REPORT

International application No.

PCT/JP02/09879

| A. CLASSIFICATION OF SUBJECT MATTER |
|---|
| Int.Cl⁷ C08L7/00, C08K3/36 |

According to International Patent Classification (IPC) or to both national classification and IPC

| B. FIELDS SEARCHED |
|---|
| Minimum documentation searched (classification system followed by classification symbols)<br>Int.Cl⁷ C08L7/00, C08K3/36 |

Documentation searched other than minimum documentation to the extent that such documents are included in the fields searched

| Jitsuyo Shinan Koho | 1926–1996 | Jitsuyo Shinan Toroku Koho | 1996–2002 |
| Kokai Jitsuyo Shinan Koho | 1971–2002 | Toroku Jitsuyo Shinan Koho | 1994–2002 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | US 5882617 A (Rhone-Poulenc Chimie),<br>16 March, 1999 (16.03.99),<br>Claims<br>& JP 08-501527 A<br>Claims | 1–4 |
| A | EP 994150 A (The Goodyear Tire & Rubber Co.),<br>19 April, 2000 (19.04.00),<br>Claims<br>& JP 2000-119400 A<br>Claims | 1–4 |
| A | US 5089554 A (Rhone-Poulenc Chime de Base),<br>18 February, 1992 (18.02.92),<br>Claims<br>& EP 217701 A    & JP 62-062838 A<br>Claims | 1–4 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>17 December, 2002 (17.12.02) | Date of mailing of the international search report<br>14 January, 2003 (14.01.03) |
|---|---|
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP02/09879

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2001-158837 A (Bridgestone Corp.), 12 June, 2001 (12.06.01), Claims (Family: none) | 1-4 |

Form PCT/ISA/210 (continuation of second sheet) (July 1998)